# EUROPEAN PATENT APPLICATION

(11) **EP 2 865 563 A1**
(43) Date of publication of application: **29.04.2015**
(21) Application number: 13189740.7
(22) Date of filing: 22.10.2013
(51) Int. Cl.: B60N 2/30

(54) **Lockable seating arrangement and method of controlling a seating capacity**

(71) Applicant: Bombardier Transportation GmbH, 10785 Berlin (DE)
(72) Inventor: Siegemund, Thomas, 14167 Berlin (DE); Griggs, Paul, Ambergate, Derbyshire DE56 2JL (GB); Butterfield, Richard, Derby, Derbyshire DE22 1GX (GB)
(74) Representative: Ramrath, Lukas

(57) **Abstract**

The invention relates to a lockable seating arrangement, in particular for a rail vehicle, wherein the seating arrangement (1) comprises a supporting structure and a foldable seating element (10), wherein the foldable seating element (10) provides a seating area (11), wherein the foldable seating element (10) is attached to the supporting structure, wherein the foldable seating element (10) is tiltable about a tilt axis (9) in order to fold out or fold in the seating area (11), wherein the seating arrangement (1) comprises a locking element (15), wherein the locking element (15) is arrangeable in a locked state and an unlocked state, wherein a movement of the foldable seating element (10) is disabled in the locked state, wherein the locking element (15) is designed and/or arranged such that in the locked state it engages with a free end (13) of the foldable seating element (10) if the foldable seating element (10) is in the folded state. Furthermore, the invention relates to a method for controlling a seating capacity within a passenger cabin, in particular of a rail vehicle. Furthermore, the invention relates to a passenger cabin comprising said seating arrangement.

## Description

The invention relates to a lockable seating arrangement, in particular for a rail vehicle. Furthermore, the invention relates to a method for controlling a seating capacity within a passenger cabin, in particular of a rail vehicle. Furthermore, the invention relates to a passenger cabin comprising said seating arrangement.

Tip up seats or folding seats have been used to give variable seating capacity in passenger cabins of e.g. trains. Usually, it is up to a passenger to decide if to deploy a seat or not. Such tip up seats, however, are often used by passengers at inappropriate times. As an individual passengers desire for comfort often outweighs the need of letting more passengers into the passenger cabin, a seat is often deployed by the passenger. An unfolded seat, however, takes up valuable standing space for other passengers. In particular in rush hours these unfolded seats disadvantageously reduce the passenger capacity and additionally present an obstruction for passenger flows, e.g. during boarding the train.

The WO 2007/141054 A1 discloses a folding seat for a passenger compartment of a vehicle, wherein the folding seat has a drive, which can be actuated, for folding up and folding down a main seat surface, wherein the folding seat has, at a front edge of the main seat surface, a projection which protrudes form the main seat surface and is intended to form a rest in a folded-up state of the main seat surface. The document also discloses a locking mechanism for locking the folding seat.

The JP 8142726 A discloses an expansion of a standing seat space by contracting a flat area of a seat by folding the seat to a seat housing.

It is an object of the present invention to provide a lockable seating structure which allows disabling and enabling an unfolding of a seating element in a simple and effective way.

It is a basic idea of the invention to provide a lockable seating arrangement in which a locking element is engageable with a free end of a foldable seating element if the foldable seating element is in a folded-up state.

A lockable seating arrangement is proposed. The seating arrangement can be arranged within a passenger cabin or saloon of a public transport vehicle, in particular a rail vehicle.

The seating arrangement comprises a supporting structure. The supporting structure can e.g. be part of a cabin frame, in particular of the side wall structure of the cabin frame. It is, however, possible, that the supporting structure is provided by an independent stand or frame which is e.g. attached to the cabin frame, for example to a floor of the passenger cabin. Also, the supporting structure can be provided by another wall structure which extends from the floor of the cabin to a ceiling and which is arranged within the passenger cabin, e.g. a room dividing element.

Furthermore, the seating arrangement comprises a foldable or tiltable seating element. The foldable seating element provides a seating area, e.g. on an upper surface of the seating element.

The foldable seating element is attached to the supporting structure, wherein the foldable seating element is tiltable or rotatable about a tilt axis in order to fold out or fold up the seating area. The seating area is laid open in a folded-out state of the seating element, wherein the seating element extends from the supporting structure e.g. into the passenger cabin. The folded-out state can also be referred to as unfolded state. In a folded-up state, which can also be referred to as folded state, the seating area is hidden. This means that a passenger can sit on the seating area in the unfolded state and is not able to sit on the seating area in the folded-up state.

The seating arrangement comprises a locking element, wherein the locking element is arrangeable in a locked state, i.e. locked setting, and an unlocked state, i.e. unlocked setting. A rotational movement of the foldable seating element is disabled or prevented in the locked state of the locking element. The rotational movement of the foldable seating element can be enabled in the unlocked state. It is possible, however, that the rotational movement of the foldable seating element is enabled in the unlocked state only if other locking means, e.g. the additional locking means which will be described in the following, are in an unlocked state.

This means that in the locked state, the rotational movement of the seating element from the folded state to the unfolded state is not possible. In contrast, such a movement can be possible in the unlocked state.

According to the invention, the locking element is designed and/or arranged such that in the locked state, the locking element engages with a free end of the foldable seating element if the seating element is in the folded state. This means that the locking element engages with the free end of the foldable seating element if the seating element is arranged in the folded state.

In this context, engages means that the movement of the free end of the seating element is disabled mechanically. It is, for example, possible that a mechanical contact between the locking element and the free end of the seating element is provided in the locked state.

The locking element can engage with the free end of the seating element only or exclusively if the seating element is arranged in the folded state. This means that only the folded state, the rotational movement can be disabled by the locking element.

This advantageously allows disabling the movement of the seating element only in the folded state. If, e.g. by accident, the movement of the seating element is disabled in the unfolded state of the foldable seating element, the unfolded seating element cannot be transferred to the folded state which results in an undesired reduction of a transport space and provides an obstruction for a passenger flow in the passenger cabin.

In another embodiment, the locking element provides a seating area of a perch seat. The seating area of the perch seat can e.g. be provided by an upper surface of the locking element. In this context, "upper" relates to a vertical direction which is directed from a floor of e.g. a passenger cabin to a ceiling of the passenger cabin. It is possible that a cushion is attached to or fixed to the seating area of the perch seat.

A perch seat is a seating arrangement which allows a passenger to lean against. This means that a perch seat cannot be used to or is not intended to fully sit on. The seating area of the perch seat can be slanted. This means that the seating area of the perch seat is inclined or slanted towards a floor of e.g. the passenger cabin. In particular, the seating surface is not parallel to or does not comprise sections which are parallel to a surface of the floor. Also, it is possible that the seating surface is not oriented orthogonal to the vertical direction.

Thus, in a locked state, i.e. if no seating capability is provided by the foldable seating element, a leaning facility is provided by the perch seat. This enhances a travel comfort for passengers while disabling an unfolding of the foldable seating element.

In another embodiment, the locking element is slidable between a first and a second end position. The locking element is slid or positioned over the free and of the foldable seating element if the foldable seating element is in a folded state and the locking element is moved from the first towards the second end position. The sliding movement can be a linear movement. This means that by linearily moving the locking element, the rotational movement of the foldable seating element can be enabled or disabled. The locked state can be achieved if the locking element is in the second end position and the seating element is in the folded state. Enabling the rotational movement of the foldable seating element can be achieved by moving the locking element to the first end position.

This advantageously provides discrete states of the locking element in which the rotational movement is enabled or disabled.

In another embodiment, the supporting structure and/or the foldable seating element comprise(s) guiding means for guiding a sliding movement of the locking element. The supporting structure and/or the foldable seating element can also comprise at least one blocking element for defining the first and the second end position.

It is possible that the locking element provides or comprises corresponding guiding means which interact with the guiding means of the supporting structure and/or the foldable seating element.

The guiding means on the foldable seating element can be arranged at a front part of the foldable seating element which connects the seating area of the foldable seating element and a bottom side of the foldable seating element. This means that the guiding means is arranged at the free end of the foldable seating element.

The guiding means can e.g. be provided by guides or bearings. Such a bearing may be designed as a bush bearing or friction bearing. It is, of course, possible to use any other type of guiding means in order to provide the desired movement of the locking element.

This advantageously allows providing a defined movement path for the locking element.

The guiding means is/are preferably designed as guiding means for a linear movement. In this case, the guiding means can be designed as linear guides or bearings. Also, the guiding means may be provided by a dovetail guide. Another option is a rail guide or a slide mounting.

The linear movement can be oriented with a predefined angle towards the floor section, wherein the angle is larger than 0 ° and smaller than 90 °. It is also possible that the linear movement can be oriented with a predefined angle towards a vertical side wall of e.g. the passenger cabin, wherein the angle is larger than 0° and smaller than 90°.

It is also possible that the linear movement can be oriented with a predefined angle towards the seating area of the perch seat or the seating area of the foldable seating element in the folded configuration. It is, for instance, possible, that a direction of the linear movement is directed parallel to at least a section of the seating area of the perch seat.

If the locking element is guided along a surface of the supporting structure, the supporting structure can comprise a surface section which is slanted towards the floor, e.g. with a predefined angle. In this case, the direction of the linear movement can be parallel to at least a section of said surface section of the supporting structure.

This advantageously allows a simple and uncomplicated movement of the locking element.

In another embodiment, the seating arrangement comprises a return spring element. The return spring element provides a return moment in order to rotate the foldable seating element into the folded state if the seating element is at least partially unfolded. This advantageously allows to automatically return the seating element to the folded state in which the rotational movement can be disabled.

In another embodiment, the seating arrangement comprises at least one actuating means for moving the locking element from the unlocked state, e.g. from the first end position, to the locked state, e.g. to the second end position, and vice versa. The actuating means can be means for actuating a linear movement of the locking element.

This advantageously allows remote controlling of the movability of the foldable seating element as movement of the locking element has not to be performed manually.

In another embodiment, the actuating means are provided by a pneumatic drive or an electric drive or a hydraulic drive or an electromagnetic drive or an electronic solenoid drive. The proposed drives advantageously allow a simple control of the movement of the locking element.

In another embodiment, the locking element is arrangeable behind a trim of a passenger cabin. The trim can be a trim of a side wall of the passenger cabin.

It is possible that the locking element is arranged behind the trim if the locking element is in the unlocked state, e.g. in the first end position. In this case, the locking element can be arranged outside or in front of the trim, in particular within the passenger cabin, if the locking element is in the locked state, e.g. in the second end position. To unlock the foldable seating element, the locking element is moved from a position outside the trim to a position behind the trim. This advantageously allows removing the locking element and also the perch seat provided by the locking element if the seating element is unlocked.

Alternatively or in addition, the locking element is movable along the top of the trim of the passenger cabin. This means that the locking element can be moved along a section of a surface of the trim which faces the passenger cabin. It is possible that during the total movement between the first and the second end position, the locking element is moved along the top of the trim. Alternatively, it is possible that the locking element is moved behind the trim during the movement from the second to the first end position.

The trim can provide the aforementioned supporting structure for the locking element. This advantageously allows providing a supporting structure for the proposed locking element by using existing mechanical devices in passenger cabin.

In another embodiment, the seating arrangement comprises at least one additional locking means for locking a seat axle of the seating element. The seat axle can be a part of the tiltable seating element. In particular, a longitudinal axis of the seat axle can correspond to the tilt axis for folding out or folding up the seating area. Thus, the seat axle is also tiltable about said tilt axis.

The additional locking means can be arrangeable in a locked state and an unlocked state, wherein a movement of the seat axle is disabled in the locked state and enabled in the unlocked state. Thus, a movement of the foldable seating element is disabled in the locked state, wherein a movement of the foldable seating element is enabled in the unlocked state.

The additional locking means advantageously provides an additional means for disabling or enabling the movement of the foldable seating element. It is possible that the locking element is brought into an unlocked state. If, for example, no central control of the locking element is available, the locking element can be moved by a passenger into an unlocked state. It is also possible that the locking element is brought into the unlocked state by accident. If, however, a rotational movement of the foldable seating element is not desired, such a movement can be disabled by the additional locking means.

Thus, the rotational movement of the foldable seating element is only enabled if the locking element and the additional lockings means are in an unlocked state. This enhances an operational safety of the foldable seating element.

The additional locking means can e.g. be provided by at least one movable, supporting structure-sided pin which is extendable into or through a corresponding opening of the seat axle. In a locked state of the additional locking means, the pin extends into or through said opening. In an unlocked state, the movable pin is arranged outside the said opening of the seat axle.

Further proposed is a method of controlling a seating capacity of a passenger cabin, in particular a passenger cabin or saloon of a rail vehicle. At least one seating arrangement according to one of the previously described embodiments is arranged within the passenger cabin. The locking element is moved to the locked state in order to disable an unfolding of the foldable seating element. The locking element can be moved to an unlocked state in order to enable the unfolding of the foldable seating element.

It is, for instance, possible to move the locking element from a first end position to a second end position in order to disable the unfolding. Correspondingly, it is possible to move the seating element from the second end position to the first end position in order to enable the unfolding.

If the aforementioned additional locking means is provided, disabling of an unfolding of the foldable seating element can additionally or alternatively be achieved if the additional locking means is moved to a locked state. Also, enabling of an unfolding of the foldable seating element can additionally or alternatively be achieved if the additional locking means is moved to an unlocked state.

In another embodiment, the movement of the locking element is triggered by an activation signal, wherein the activation signal is transmitted to at least one actuating means which moves the locking element into the locked state or into the unlocked state depending on the activation signal or type of activation signal. The activation signal can be generated remotely. It is possible that bringing the additional locking means into the locked or unlocked state is also triggered by said activation signal or another activation signal.

This advantageously allows locking or unlocking the foldable seating element remotely. In particular, locking or unlocking is not performed by a manual operation of the locking element.

In another embodiment, the activation signal is provided by a driver in a driving cab, e.g. a driving cab of the rail vehicle. Alternatively, the activation signal is provided by a passenger in the passenger cabin, e.g. via an activation means, e.g. a switch. The passenger can be an authorized passenger such as a conductor or driver within the passenger cabin. Alternatively, the activation signal is provided by a timer system. It is, for instance, possible, to unlock the seating element in time periods with a reduced number of passengers (off peak times). In peak times, however, an activation signal can be generated such that the foldable seating element is locked. Thus, it is possible to disable the rotational movement of the foldable seating element in peak times, such as in the morning hours, e.g. from 6am to 9am, and in the evening hours, e.g. from 4pm to 6pm. For the remaining time periods, the foldable seating element can be unlocked.

Alternatively, the activation signal can be generated by a remote system. The remote system can denote a system which is remote from the vehicle comprising the passenger cabin which comprises the seating arrangement. This advantageously allows controlling a seating capacity e.g. from a central control room.

Alternatively, the activation signal can be provided by a monitoring system. The monitoring system can be a camera-based observation system for observing the passenger cabin or parts of the passenger cabin. In particular, the observation system can be a closed circuit television system (CCTV system).

It is, for instance, possible to perform an image-based detection of a number of passengers within the passenger cabin. If the number reaches or exceeds a predetermined number, the activation signal can be generated such that the foldable seating element is locked. If the image-based determined number is smaller than the predetermined number, the seating element can be unlocked. This advantageously allows an individual control of the seating capacity of each passenger cabin.

If there is more than one seating arrangement, the activation signal can be a central signal. This means, that all or predetermined groups of seating arrangements are controlled by the same activation signal. It is, of course, possible that each seating arrangement is controlled by a separate and individual activation signal.

In another embodiment, the movement of the locking element from the unlocked state to the locked state is only enabled if the foldable seating element is in the folded state. It is, for instance, possible, to determine an angular position of the foldable seating element, e.g. with an angular position sensor. If a sensed angular position does not correspond to a predetermined angular position of the foldable seating element in the folded state, the movement of the locking element is disabled. This advantageously provides an enhanced operational safety of the proposed seating arrangement.

Correspondingly, it is possible that bringing the additional locking means from the unlocked state to the locked state is only enabled if the foldable seating element is in the folded state.

Further proposed is a passenger cabin or saloon of a vehicle, in particular a rail vehicle. The passenger cabin comprises at least one lockable seating arrangement according to one of the previously described embodiments.

In another embodiment, the locking element is arrangeable behind a trim of the passenger cabin in the unlocked state or on top of a section of the trim in the unlocked state.

The invention will be described with reference to the following figures. The figures show:
- Fig. 1: a lockable seating arrangement in a locked configuration,
- Fig. 2: the lockable seating arrangement of Fig. 1 in an unlocked configuration and
- Fig. 3: a schematic block diagram of a control circuit of the lockable seating arrangement.

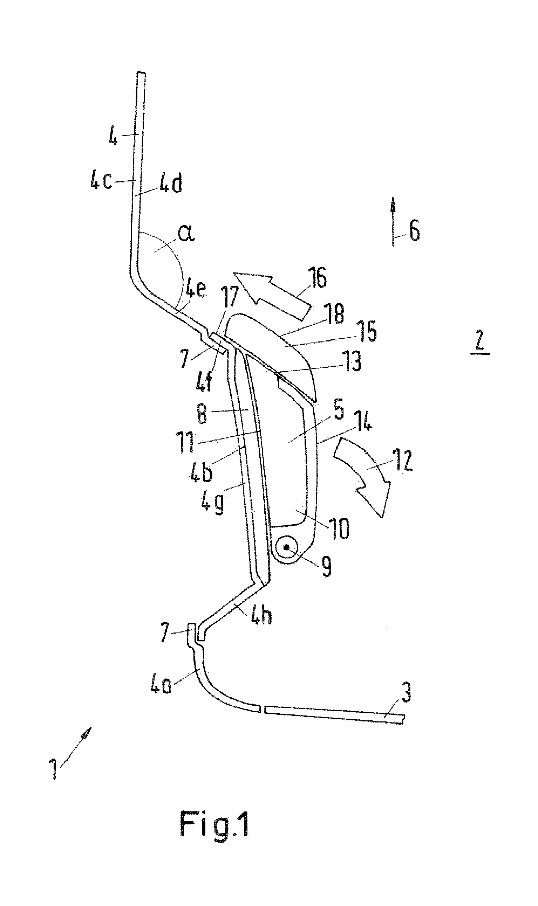

Fig. 1 shows a lockable seating arrangement 1. The lockable seating arrangement 1 is arranged in a passenger cabin 2 of a vehicle, in particular a rail vehicle. Shown is a floor 3 of the passenger cabin 2 and a trim 4 of a side wall of the passenger cabin 2. The trim 4 provides a supporting structure for a seating element 5.

It is shown that the trim 4 comprises three sections. A first section 4a is an arcuated section which connects the floor 3 to a supporting section 4b of the trim 4. The arcuated section 4a is arcuated by 90°, wherein one end of the arcuated section 4a is connected to the floor 3 and the other end of the arcuated section is extending towards a ceiling (not shown) of the passenger cabin 2 in a vertical direction 6. The trim 4 also comprises a second connecting section 4c which connects the ceiling of the passenger cabin 2 to the supporting section 4b. The second connecting section 4c comprises a vertical subsection 4d which extends in the vertical direction 6, wherein the vertical direction 6 is directed from the floor 3 to the ceiling (not shown). Furthermore, the second connecting section comprises a slanted subsection 4e which encloses a predetermined angle α with the vertical subsection 4d, i.e. with the vertical direction 6. The angle α is larger than 90° but smaller than 180°.

The slanted subsection 4e is directed towards the floor 3. The supporting section 4b of the trim 4 is connected to the first and the second connecting section 4a, 4c. To connect the supporting section 4b to the aforementioned connecting sections 4a, 4c, the connecting sections 4a, 4c provide contact surfaces 7 on which corresponding contact surfaces of the supporting section 4b are arranged. The supporting section 4b comprises a slanted subsection 4f which is aligned with the slanted subsection 4e of the second connecting section 4c. Furthermore, the supporting section 4b comprises a vertical subsection 4g, which extends in the vertical direction 6 or encloses a predetermined small angle, e.g. an angle between 0° and 30°, with the vertical direction 6.

Furthermore, the supporting section 4b comprises another slanted subsection 4h, which connects the vertical section 4g with the first connecting section 4a. A base plate 8 of the seating element 5 is mechanically fixed to the vertical subsection 4g of the supporting section 4b of the trim 4. Also shown is a rotational axis 9 which extends in a longitudinal direction (not shown). The rotational axis 9 can be provided by the base plate 8. The longitudinal direction is oriented perpendicular to the plane of projection of Fig. 1 and points towards the observer. The longitudinal direction 9 can be parallel to a longitudinal axis of the passenger cabin 2.

Furthermore, the seating element 5 comprises a foldable seating element 10. The foldable seating element 10 is rotatable about the rotational axis 9 in order to fold out or fold in a seating area 11.

In Fig. 1, the seating element 5, in particular the foldable seating element 10, is shown in a folded state. In this state, the seating area 11 buts against the base plate 8, in particular a surface of the base plate 8 which is oriented towards the passenger cabin 2. A direction of a rotational movement of the foldable seating element 10 during unfolding is indicated by an arrow 12.

The foldable seating element 10 further comprises a free end 13 which connects the seating area 11 to a bottom part 14 of the foldable seating element 10. The free end 13 is arranged at a front part of the foldable seating element 10.

The seating arrangement 1 further comprises a locking element 15 which can be slid over the free end 13 of the foldable seating element 10 if the foldable seating element 10 is in the folded state as shown in Fig. 1. In the locked state, the locking element 15 engages with the free end 13 of the seating element 10. In this configuration, the rotational movement 12 is disabled. This means, that the lockable seating arrangement 1 is locked. To unlock the seating arrangement 1, in particular the foldable seating element 10, the locking element 15 can be moved linearly away from the free end 13 of the foldable seating element 10. This linear movement is indicated by an arrow 16.

It is shown, that the free end 13 of the foldable seating element 10 comprises a section or surface which is aligned with a surface of the slanted subsection 4e of the second connecting section 4c of the trim 4 and a surface of the slanted subsection 4f of the supporting section 4b of the trim 4. The locking element 15 can be moved along an upper surface 17 provided by the said subsections 4e, 4f, 13. Not shown are guiding means, in particular linear guides, for guiding the movement.

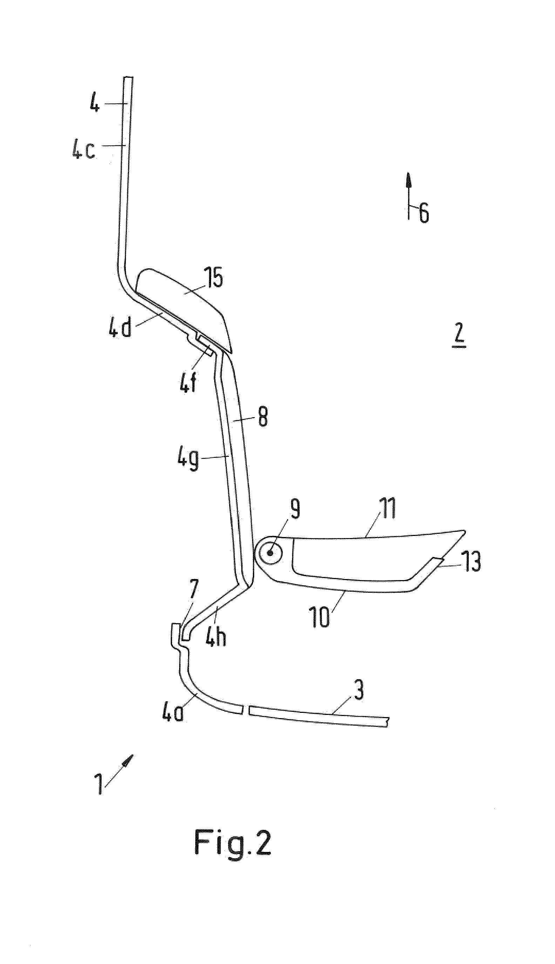

In Fig. 1, the locking element 15 is positioned at a second end position. At said second end position, the locking element 15 is positioned over or above the free end 13 of the foldable seating element. In this context, the term "over" is related to the vertical direction 6. To unlock the foldable seating element 10, the locking element 15 is moved to the first end position. This first end position is shown in Fig. 2.

In Fig. 1 it is shown that the locking element 15 can be used as a perch seat in the locked configuration. A seating area 18, which is provided by an upper surface of the locking element 15, can be used by a passenger to lean against. The seating area 18 is slanted and thus not oriented orthogonal to the vertical direction 6. With respect to the vertical direction 6, the seating area 18 of the perch seat provided by the locking element 15 in the locked state is arranged at a higher height than the seating area 11 provided by the foldable seating element 10 in the unfolded state (see Fig. 2).

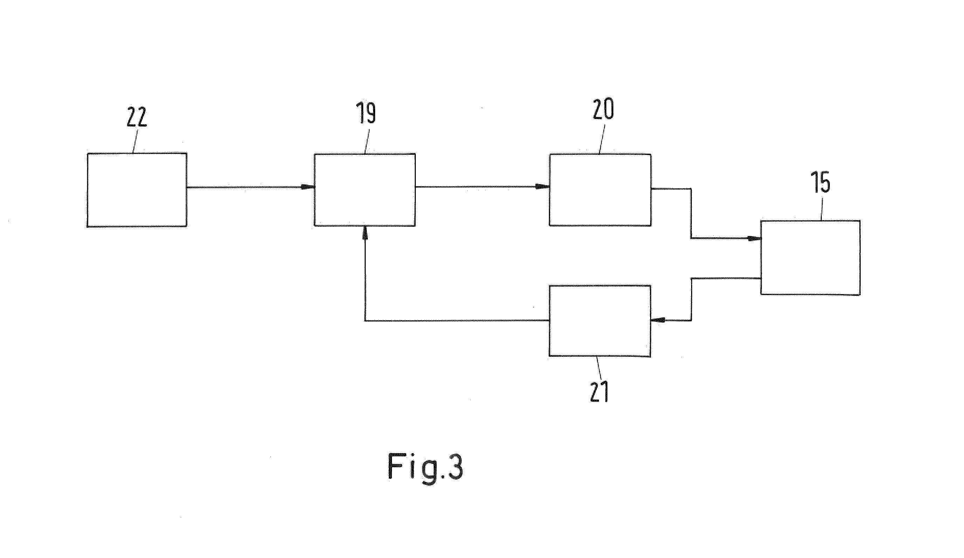

Fig. 3 shows an actuator 20 for actuating the linear movement of the locking element 15 from the first end position to the second end position and vice versa. Said actuator 20 is not shown in Fig. 1 and Fig. 2.

Fig. 2 shows the foldable seating arrangement 1 of Fig. 1 in an unlocked configuration. It is shown that the locking element 15 has been moved in the direction 16 (see Fig. 1) from the second end position into a first end position. In the first end position, the locking element 15 is positioned over or above the slanted subsections 4d, 4f of the second connecting section 4c and the supporting section 4g of the trim 4. In particular, no part of the locking element 15 overlaps the free end 13 of the foldable seating element 10 in the first end position. Thus, the rotational movement 12 (see Fig. 1) of the foldable seating element 10 about the rotational axis 9 is enabled.

In Fig. 2, the foldable seating element 10 is shown in an unfolded state. In this unfolded state, the foldable seating element 10 extends from the trim 4 into the passenger cabin 2, wherein the seating area 11 is parallel or approximately parallel to the floor 3, i.e. orthogonal or approximately orthogonal to the vertical direction 6.

In Fig. 3, a schematic block diagram of a control circuit of the lockable seating arrangement 1 shown in Fig. 1 and Fig. 2 is shown. The control circuit comprises a control unit 19, an actuator 20 and an angular sensor 21. Furthermore, the control circuit comprises an activation signal input means 22.

The actuator 20 is designed and/or arranged such that a locking element 15 of the seating arrangement 1 can be moved linearly from the locked state into an unlocked state and vice versa. The angular position sensor 21 senses an angular position of the foldable seating element 10 (see Fig. 1). If the angular position of the foldable seating element 10 does not correspond to the folded state of the foldable seating element 10 (which is evaluated by the control unit 19), the linear movement of the locking element 15 is disabled.

Via the input means 22, an activation signal can be inputted, e.g. by a driver of the vehicle comprising the passenger cabin 2 (see fig. 1). The input means 22 can also be designed as the previously described CCTV system, wherein a control unit 19 can be used to perform an image-based detection of a number of passengers within the passenger cabin 2. The control unit 19 controls the actuator 20 such, that the locking element 15 is moved into the locked state or into the unlocked state depending on the activation signal.

## Claims

1. Lockable seating arrangement, in particular for a rail vehicle, wherein the seating arrangement (1) comprises a supporting structure and a foldable seating element (10), wherein the foldable seating element (10) provides a seating area (11), wherein the foldable seating element (10) is attached to the supporting structure, wherein the foldable seating element (10) is tiltable about a tilt axis (9) in order to fold out or fold in the seating area (11), wherein the seating arrangement (1) comprises a locking element (15), wherein the locking element (15) is arrangeable in a locked state and an unlocked state, wherein a movement of the foldable seating element (10) is disabled in the locked state,
**characterized in that**
the locking element (15) is designed and/or arranged such that in the locked state it engages with a free end (13) of the foldable seating element (10) if the foldable seating element (10) is in the folded state.

2. The seating arrangement according to claim 1, wherein the locking element (15) provides a seating area (18) of a perch seat.

3. The seating arrangement according to claim 1 or 2, wherein the locking element (15) is slideable between a first and a second end position, wherein the locking element (15) is slideable over the free end (13) of the foldable seating element (10) if the foldable seating element (10) is in the folded state and the locking element (15) is moved from the first towards the second end position.

4. The seating arrangement according to one of the claims 1 to 3, wherein the supporting structure and/or the foldable seating element (10) comprise guiding means for guiding a sliding movement of the locking element (15).

5. The seating arrangement according to one of the claims 1 to 4, wherein the seating arrangement (1) comprises a return spring element providing a return moment in order to rotate the foldable seating element (10) into the folded state if the foldable seating element (10) is at least partially unfolded.

6. The seating arrangement according to one of the claims 1 to 5, wherein the seating arrangement (1) comprises at least one actuating means for moving the locking element (15) from the unlocked state to the locked state and vice versa.

7. The seating arrangement according to claim 6, wherein the actuating means are provided by a pneumatic drive or an electric drive or a hydraulic drive or an electromagnetic drive or an electronic solenoid drive.

8. The seating arrangement according to one of the claims 1 to 7, wherein the locking element (15) is arrangeable behind a trim (4) and/or movable on top of a trim (4) of a passenger cabin (2).

9. The seating arrangement according to one of the claims 1 to 8, wherein the seating arrangement comprises at least one additional locking means for locking a seat axle of the seating element (10).

10. A method of controlling a seating capacity of a passenger cabin (2), in particular a passenger cabin (2) of a rail vehicle, wherein at least one seating arrangement (1) according to one of the claims 1 to 9 is arranged within the passenger cabin (2), wherein the locking element (15) is moved to the locked state in order to disable the unfolding of the foldable seating element (10).

11. The method of claim 10, wherein the movement of the locking element (15) is triggered by an activation signal, wherein the activation signal is transmitted to at least one actuating means which moves the locking element (15) into the locked state or the unlocked state depending on the activation signal.

12. The method of claim 11, wherein the activation signal is provided by a driver in a driving cab or by a passenger in the passenger cabin (2) or by a timer system or by remote system or by a monitoring system.

13. The method of one of the claims 10 to 12, wherein a movement of the locking element (15) from the unlocked state to the locked state is only enabled if the foldable seating element (10) is in the folded state.

14. A passenger cabin of a vehicle, in particular a rail vehicle, wherein the passenger cabin (2) comprises at least one lockable seating arrangement (1) according to the claims 1 to 9.

15. The passenger cabin according to claim 14, wherein the locking element (15) is arranged behind a trim (4) of the passenger cabin (2) in the unlocked state or on top of a section (4e, 4f) of the trim (4) in the unlocked state.
